## Europäisches Patentamt
## European Patent Office
## Office européen des brevets

(11) Numéro de publication: **0 005 411**
**B1**

(19)

(12) **FASCICULE DE BREVET EUROPEEN**

(45) Date de publication du fascicule de brevet: **10.06.81**

(51) Int. Cl.³: **B 63 B 35/12,**
**E 02 B 15/04, C 02 F 1/40**

(21) Numéro de dépôt: **79430009.5**

(22) Date de dépôt: **06.04.79**

(54) Dispositifs et procédés pour récupérer des nappes flottantes de liquide.

(30) Priorité: **24.04.78 FR 7813266**

(43) Date de publication de la demande:
**14.11.79 Bulletin 79/23**

(45) Mention de la délivrance du brevet:
**10.06.81 Bulletin 81/23**

(84) Etats Contractants Désignés:
**DE FR GB IT NL**

(56) Documents cités:
**FR - A - 1 340 246**
**GB - A - 804 368**
**US - A - 3 708 070**
**US - A - 3 847 816**

(73) Titulaire: **Diaz, Martin**
**Le Panorama Route de Marseille**
**F-13500 Martiques (FR)**

(72) Inventeur: **Diaz, Martin**
**Le Panorama Route de Marseille**
**F-13500 Martiques (FR)**

(74) Mandataire: **Jarry, Marie-Thérèse et al,**
**C/O CABINET BEAU DE LOMENIE 14, rue Raphael**
**F-13008-Marseille (FR)**

Courier Press, Leamington Spa, England.

# Dispositifs et procédés pour récupérer des nappes flottantes de liquide.

L'invention a pour objet des dispositifs et des procédés pour récupérer les nappes flottantes de liquides notamment les nappes d'hydrocarbures étalées à la surface d'un plan d'eau. On connaît de nombreux dispositifs pour récupérer les nappes flottantes. Parmi ceux-ci, on connaît des bateaux qui comportent des bassins de décantation et qui portent un dispositif à seuil par dessus lequel se déverse la nappe superficielle pour entrer dans les bassins de décantation. Les brevets français 75/10285, 72/34617, 1.362.889, 1.524.441, 77/32659, 77/18543, 73/24911, 71/38148 et 1.305.541 décrivent de tels bateaux ramasseurs de nappes flottantes.

On connaît aussi l'objet du brevet U.S. No. 3.847.816 qui est un appareil composé d'un bateau comportant des cuves de décantation et d'un appareil d'écrémage qui est relié à la partie inférieure du bateau par deux tuyaux flexibles dans lesquels l'eau s'écoule par gravité.

Ces dispositifs flottants connus présentent un inconvénient du fait que la ligne de flottaison du bateau se déplace verticalement à mesure que le bateau se remplit et que le seuil de déversement est lié au bateau. Or la hauteur de la lame d'eau superficielle qui se déverse par dessus le seuil doit rester très faible pour que le mélange d'eau et d'hydrocarbures qui pénètre dans les réservoirs de décantation contienne une proportion importante d'hydrocarbures. Il faut donc, sur ces appareils connus, régler en permanence le niveau du seuil de déversement de ces dispositifs pour qu'ils soient efficaces.

Un objectif de la présente invention est de procurer un dispositif de récupération des nappes de liquide flottant sur un plan d'eau ou d'un autre liquide plus lourd, lequel dispositif comporte un appareil écrémeur porté par des flotteurs et qui flotte indépendamment du bateau en restant toujours à la même position relative par rapport à la surface de l'eau, de sorte qu'il n'est pas nécessaire d'adjuster le niveau de l'écrémeur en fonction du remplissage du bateau, dans lequel dispositif la lame superficielle qui contient les hydrocarbures s'écoule gravitairement vers des réservoirs de décantation suivant un régime non turbulent, de telle sorte qu'il ne se forme pas une émulsion d'eau et d'hydrocarbures et que la décantation se produit rapidement et conduit à une très bonne séparation de l'eau et des hydrocarbures.

Cet objectif est atteint au moyen d'un dispositif pour récupérer des nappes flottantes de liquide, notamment des nappes d'hydrocarbures, où l'appareil d'écrémage comporte un récipient ouvert à la partie supérieure, qui est porté par des flotteurs et qui flotte indépendamment dudit bateau, lequel récipient comporte une paroi latérale mobile dont le bord inférieur est articulé autour d'un axe horizontal et dont le bord supérieur est fixé à un flotteur cylindrique qui flotte dans le liquide contenu ledit récipient, de sorte que ladite paroi mobile constitue un volet rabattable vers l'intérieur dudit récipient et que la génératrice supérieure dudit flotteur constitue la ligne de crête d'un seuil flottant par dessus lequel une lame de liquide se déverse dans ledit récipient et s'écoule par gravité vers les cuves dudit bateau.

Avantageusement, le bateau est lesté et il comporte des caissons étanches.

Avantageusement, le récipient de l'appareil d'écrémage est porté par deux flotteurs longitudinaux perpendiculaires à la ligne de crête du seuil flottant et les bords supérieurs des parois latérales fixes dudit récipient sont disposées au-dessus de la surface libre du liquide.

L'invention a pour résultat un nouveau dispositif pour ramasser les nappes de liquide, notamment d'hydrocarbures, qui flottent sur un plan d'eau ou sur un plan de tout autre liquide.

Un avantage essentiel des dispositifs selon l'invention provient de ce que l'appareil d'écrémage est relié au bateau par un flexible et qu'il est donc indépendant du bateau. Le niveau du seuil de déversement porté par l'appareil d'écrémage peut donc être reglé de façon totalement indépendante de la charge du bateau. On peut donc utiliser un appareil d'écrémage à seuil flottant qui permet d'obtenir un autoréglage automatique du niveau du seuil en fonction du débit qui s'écoule hors de l'appareil d'écrémage. On peut régler à distance le débit qui s'écoule à travers le tuyau flexible au moyen d'une vanne placé sur le bateau ou d'un évent à ouverture variable, ce qui permet de faire varier l'épaisseur de la lame d'eau qui passe au dessus du seuil et la concentration en hydrocarbures de mélange écrémé. On connaît déjà des appareils d'écrémage à seuil flottant. Ceux-ci sont utilisés en combinaison avec une pompe qui aspire le mélange liquide qui se déverse dans l'appareil et qui l'évacue vers un décanteur. Il se forme alors dans la pompe une émulsion d'eau et d'hydrocarbures et la séparation par décantation devient très difficile. Les dispositifs selon l'invention remédient à cet inconvénient.

Un autre avantage des dispositifs selon l'invention réside dans le fait que l'on peut utiliser un bateau à fond plat ayant un faible tirant d'eau qui peut donc servir à dépolluer des étendues d'eau peu profondes. L'appareil d'écrémage peut être placé exactement aux endroits pollués, même si ceux-ci sont peu profonds et d'accès difficile par exemple dans des criques d'une côte découpée ou dans des bassins portuaires. L'appareil d'écrémage a une faible inertie et il suit facilement les mouvements de la houle tant que celle-ci reste modérée et les dispositifs selon l'invention peuvent être utilisés sur une mer modérément agitée. L'inertie du bateau n'intervient pas puisque l'appareil écrémeur flotte indépendamment du bateau. Un dispositif selon l'invention peut être utilisé en mer quelle que soit la marée.

Un autre avantage d'un dispositif selon l'invention réside dans le fait qu'on peut remplir les cuves de décantation en utilisant uniquement un écoulement gravitaire, sans mettre en route aucune pompe, ce qui permet de l'utiliser sans danger pour récupérer des nappes flottantes de liquides inflammables et volatils tels que de l'essence ou du kérosène. Il faut évidemment prendre ensuite des précautions pour vidanger les cuves, mais cette opération peut avoir lieu dans un site protégé au lieu de se situer en un lieu ou un incendie accidentel pourrait gagner toute une nappe flottante et se propager à l'ensemble d'une installation ou à un navire pétrolier.

Un dispositif selon l'invention peut fonctionner de façon continue ou presque continue en rejetant à la mer l'eau propre qui s'accumule dans le fond des cuves de décantation jusqu'à ce que ces cuves soient remplies du produit à récupérer. On peut également évacuer les hydrocarbures par pompage à mesure que la décantation a lieu et fonctionner ainsi en continu.

La description suivante se réfère aux dessins annexés qui représentent, sans aucun caractère limitatif, un exemple réalisation d'un dispositif selon l'invention.

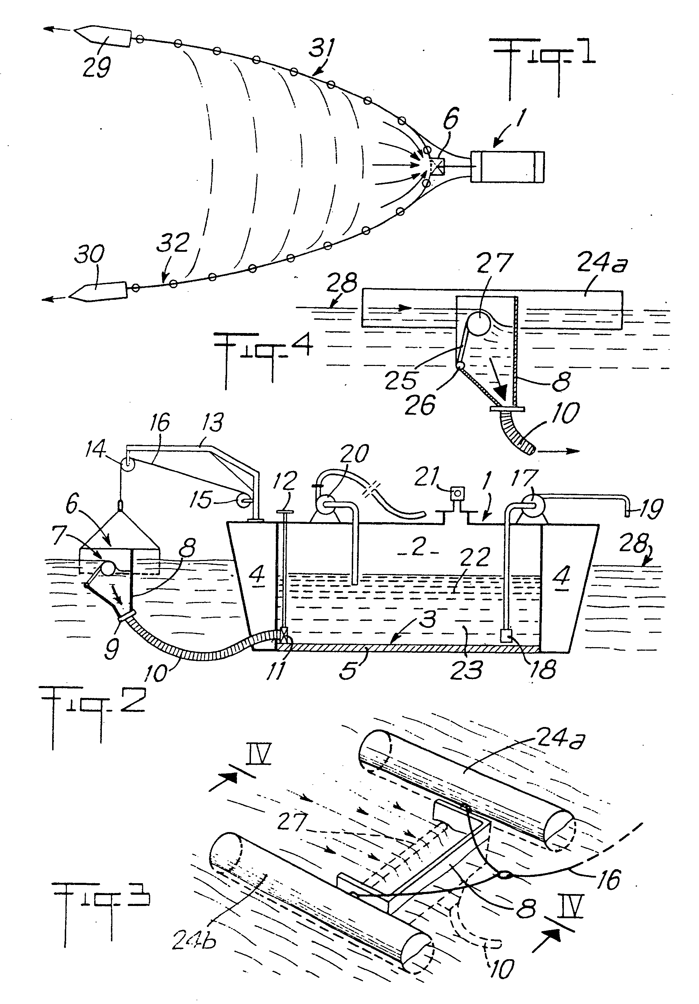

La figure 1 est une vue en plan d'un exemple d'application d'un dispositif selon l'invention de récupération de nappes flottantes; la figure 2 est une coupe verticale du dispositif de récupération de nappes flottantes; la figure 3 est une vue en perspective de l'écrémeuse équipant un dispositif selon l'invention; la figure 4 est une coupe selon IV—IV de la figure 3.

Un dispositif de récupération de nappes flottantes selon l'invention est destiné à enlever de la surface d'une étendue d'eau ou de tout autre liquide, des nappes flottantes, par exemple des nappes d'hydrocarbures ou toute autre nappe d'un produit plus léger que l'eau.

La figure 1 représente une application d'un dispositif selon l'invention par exemple en mer, sur un étang ou un lac, à l'intérieur des bassins d'un port, ou sur n'importe quelle étendue d'eau importante.

Un dispositif selon l'invention est représenté en coupe verticale sur la figure 2. Ce dispositif comporte un bateau 1 équipé de cuves 2. Lorsque le bateau est vide, le fond 3 des cuves est situé au-dessous de la ligne de flottaison 28, qui correspond au niveau de la surface libre du liquide. Par exemple, le fond 3 des cuves est à environ un mètre au-dessous de la ligne de flottaison 28. De préférence, le bateau 1 comporte également, par mesure de sécurité, des caissons étanches 4, qui sont situés par exemple à l'avant et à l'arrière du bateau. De préférence, le fond du bateau comporte un lest 5 afin de maintenir le fond 3 à une profondeur suffisante lorsque le bateau est vide et afin que la flottabilité du bateau soit telle que l'enfoncement pendant le chargement soit progressif et permette un remplissage des cuves continu, régulier et complet. Un bateau comportant plusieurs cuves peut être lesté en remplissant certaines de ces cuves d'eau propre et en les vidangeant à mesure que d'autres cuves se remplissent. Le terme bateau est utilisé dans un sens général pour désigner toutes sortes d'embarcations, soit automotrices, soit remorquées, par exemple une barque ou un chaland à fond plat.

Un dispositif selon l'invention comporte, en outre, au moins un appareil d'écrémage 6 qui flotte à la surface du liquide et qui comporte un seuil flottant 7 qui est maintenu automatiquement très légèrement au-dessous du niveau de la surface du liquide, de telle sorte que seule une lame de liquide superficielle franchit le seuil et tombe à l'intérieur de l'appareil 6. Cet appareil d'écrémage comporte un récipient 8 dont le fond comporte au moins un orifice 9 qui est relié par un tuyau flexible 10 de gros diamètre, par exemple 150 mm, à la partie inférieure des cuves 2. Une vanne 11 est située à l'extrémité du tuyau 10. Elle est munie d'une tige de commande 12 et permet d'interrompre l'écoulement du liquide ou de régler le débit d'écoulement. Le bateau 1 porte un appareil de manutention composé d'une potence 13 portant à son extrémité une poulie 14 et d'un treuil 15 sur lequel s'enroule un câble 16 qui sert à manutentionner l'appareil d'écrémage 6 pour le poser à la surface de l'eau pour le soulever pendant les déplacements. Le bateau 1 porte une première pompe 17 dont la crépine d'aspiration 18 est située dans le fond des cuves 2 et dont le tuyau de refoulement 19 se déverse hors du bateau, dans la mer. Dans l'exemple de la figure 1, le bateau 1 porte une deuxième pompe 20 qui sert à pomper les hydrocarbures et à les renvoyer dans un bateau citerne ou dans un camion citerne pour les transporter vers des stations de décantation ou d'incinération. Bien entendu, plusieurs appareils d'écrémage 6 peuvent être utilisés en combinaison avec un même bateau 1.

Le fonctionnement du dispositif est le suivant. L'appareil d'écrémage 6 est posé à la surface du liquide de telle sorte qu'il flotte indépendant du bateau 1. Comme il est relié au bateau par un flexible 10, il ne suit pas les mouvements du bateau lorsque celui-ci s'enfonce plus ou moins dans l'eau en fonction de sa charge out de la houle. La pellicule superficielle passe par dessus le seuil 7 et s'écoule par gravité à travers le tuyau 10 vers les cuves 2 tant que la surface du liquide dans les cuves 2 est à un niveau inférieur à la ligne de flottaison qui monte à mesure que les cuves 2 se remplissent. Bien entendu les cuves sont équipées à leur partie supérieure d'évents 21 avec clapet qui permettent à l'air de s'échapper pendant le remplissage des cuves. On peut également utiliser des évents munis d'une vanne qui permet de régler le débit d'air à travers les évents et donc le débit de liquide qui s'écoule à travers le flexible 10 et également de régler ainsi à distance l'épaisseur de la lame d'eau qui passe par dessus le seuil 7. Il se produit dans les cuves 2 une séparation par décantation entre les hydrocarbures ou autres liquides légers 22 qui flottent et l'eau 23. Lorsque la surface du liquide dans les cuves 2 est au même niveau que la surface libre du liquide à l'extérieur l'écoulement s'arrête automatiquement. On peut alors laisser décanter puis mettre la pompe 17 en route et rejeter à la mer de l'eau propre. A ce moment, l'écrémage recommence. On peut également utiliser la pompe 17 en continu et dans ce cas, le dispositif selon l'invention écrème en continu et la couche d'hydrocarbures 22 s'épaissit jusqu'a ce que les cuves 2 soient remplies d'hydrocarbures. On peut également évacuer en continu les hydrocarbures au moyen de la pompe 20 que l'on met en route lorsque l'épaisseur de la couche 22 d'hydrocarbures est suffisante. On notera que, du fait de la différence de densité entre les hydrocarbures 22 et l'eau, l'écoulement gravitaire entre l'appareil à écrémer 6 et les cuves se poursuit jusqu'à un état d'équilibre dans lequel la surface du liquide dans les cuves se situe legèrement au-dessus de la ligne de flottaison.

Les figures 3 et 4 représentent à plus grande échelle un mode de réalisation préférentiel d'un appareil d'écrémage 6 équipant un dispositif selon l'invention. Cet appareil comporte un récipient 8 qui est porté par deux flotteurs longitudinaux 24a et 24b situés de part et d'autre du récipient. Le récipient 8 a par exemple une forme rectangulaire et il est ouvert à son extrémité supérieure. Le récipient 8 est délimité par trois parois latérales verticales fixes dont le bord supérieur est maintenu au-dessus de la surface libre 28 du liquide et par une quatrième paroi mobile 25, qui est un volet dont le bord inférieur est articulé autour d'un axe horizontal 26. Le bord supérieur du volet 25 est fixé sur un flotteur cylindrique transversal 27 qui est perpendiculaire aux flotteurs 24a et 24b. Le flotteur 27 est situé du côté intérieur du volet articulé 25 de telle sorte qu'il flotte sur le liquide contenu dans le récipient 8 et la génératrice supérieure du flotteur 27 constitue la ligne de crête d'un seuil flottant par dessus lequel passe le liquide pour se déverser dans la récipient 8. Lorsque le niveau du liquide dans le récipient 8 baisse, le seuil baisse, le débit du déversoir augmente et devient supérieur au débit du tuyau 10 et le seuil remonte, Si, au contraire, le niveau du liquide dans le récipient 8 a tendance à monter, le seuil monte, le débit du déversoir diminue et devient inférieur au débit du tuyau 10 et le seuil redescend. Il se produit donc une régulation automatique du seuil flottant à un niveau où le débit du déversoir équilibre celui du tuyau 10. On peut régler à distance le débit à travers le tuyau 10 en réglant l'ouverture de la vanne 11 ou celle de l'évent 21. Les flèches indiquent sur les figures 3 et 4 le sens d'écoulement du liquide. La nappe flottante superficielle s'écoule par dessus le seuil flottant 27. Le mélange d'eau et d'hydrocarbures contenu dans le récipient flottant 8 s'écoule par gravité vers les cuves 2. Le déversement par dessus le seuil et l'écoulement gravitaire dans le tube 10 sont des écoulements laminaires au cours desquels les hydrocarbures ne sont pas brassés avec l'eau pour former une émulsion de sorte que la décantation qui a lieu dans la cuve 2 produit rapidement la séparation des deux liquides.

Dans l'exemple d'application représenté sur la figure 1, le bateau 1 est un chaland qui est déplacé à vitesse lente, de l'ordre de 1 à 2 noeuds, par deux remorqueurs 29 et 30 qui sont reliés au chaland par deux barrages flottants 31 et 32 qui sont reliés au chaland par deux barrages flottants 31 et 32 qui dessinent un V. Dans cette application, l'appareil écrémeur 6 se trouve placé à l'avant du chaland 1 dans une ouverture entre les deux barrages flottants 31 et 32, de telle sorte que la pellicule flottante d'hydrocarbures est rassemblée vers le seuil de l'appareil d'écrémage et s'engouffre dans celui-ci.

La figure 1 représente un exemple d'application dynamique sur un plan d'eau, par exemple sur un bassin portuaire, sur lequel flottent des pellicules d'hydrocarbures éparpillées, qui doivent être rabattues par des barrages flottants pour les rassembler.

Les dispositifs selon l'invention peuvent faire également l'objet d'une utilisation statique, par exemple dans des bassins d'eaux résiduelle de raffineries ou sur des étendues d'eau sur lesquelles flottent des nappes d'hydrocarbures non fragmentées.

La figure 1 représente un bateau 1 comportant un les solide 5. On peut également utiliser un bateau comportant plusieurs cuves dont certaines seulement sont remplies d'un lest liquide. On commence alors par récupérer les nappes flottantes dans les cuves vides et, à mesure qu'elles se remplissent, on rejette le lest liquide pour utiliser ensuite comme cuves de décantation les cuves qui étaient initialement remplies de lest liquide.

**Revendications**

1. Dispositif pour récupérer des nappes flottantes de liquide, notamment d'hydrocarbures, composé d'un bateau comportant au moins une cuve de décantation dont le fond est situé au-dessous de la ligne de flottaison à vide et d'au moins un appareil d'écrémage qui comporte un seuil par dessus lequel se dévjse une nappe de liquide et un orifice qui est situé à la partie inférieure et qui est relié à la partie inférieure desdites cuves de décantation par un tuyau flexible dans lequel ledit liquide s'écoule par gravité, caractérisé en ce que ledit appareil d'écrémage comporte un récipient ouvert à la partie supérieure, que est porté par des flotteurs et qui flotte indépendamment dudit bateau, lequel récipient comporte un paroi latérale mobile dont le bord inférieur est articulé autour d'un axe horizontal et dont le bord supérieur est fixé à un flotteur cylindrique qui flotte dans le liquide contenu dans ledit récipient, de sorte que ladite paroi mobile constitue un volet rabattable vers l'intérieur dudit récipient et que la génératrice supérieure dudit flotteur constitue la ligne de crête d'un seuil flottant par dessus lequel une lame de liquide se déverse dans ledit récipient et s'écoule par gravité vers les cuves dudit bateau.

2. Dispositif selon la revendication 1, caractérisé en ce que ledit bateau est lesté.

3. Dispositif selon l'une quelconque des revendications 1 et 2, caractérisé en ce que ledit bateau comporte des caissons étanches.

4. Dispositif selon la revendication 1, caractérisé en ce que ledit récipient est porté par deux flotteurs longitudinaux perpendiculaires audit seuil flottant et les bords supérieure des parois latérales fixes dudit récipient sont disposés au-dessus de la surface libre du liquide.

5. Dispositif selon l'une quelconque des revendications 1 à 4, caractérisé en ce que ledit tuyau flexible comporte une vanne placée sur ledit bateau, laquelle vanne comporte une tige de commande permettant de régler l'ouverture et de faire varier à distance la hauteur de la lame de liquide qui se déverse par dessus ledit seuil.

6. Dispositif selon l'une quelconque des revendications 1 à 4, caractérisé en ce que les cuves de décantation comportent des évents équipés d'une vanne qui permet de régler l'ouverture de l'évent et de faire varier à distance la hauteur de la lame de liquide qui se déverse par dessus ledit seuil flottant.

7. Procédé pour récupérer des nappes flottantes au moyen d'un dispositif selon la revendication 2, caractérisé en ce que ledit bateau comporte plusieurs cuves dont certaines seulement sont remplies d'un lest liquide et que l'on relie d'abord l'appareil d'écrémage au fond des cuves de décantation vides et à mesure que celles-ci sont remplies, on rejette le lest liquide et on relie l'appareil d'écrémage au fond des cuves qui viennent d'être vidées de leur lest liquide.

## Claims

1. Device for the recovery of floating sheets of liquid, and in particular hydrocarbons, consisting of a boat with at least one settling tank the bottom of which is situated under the floating line when empty, and at least one separating apparatus comprising a sill over which flows a sheet of liquid and an orifice situated at the lower portion and connected to the lower part of the said settling tanks via a flexible pipe into which the said liquid flows by gravity, characterized in that the said separating apparatus comprises a container open at the top, which is supported by floats and which floats independently of the said boat, said container comprising a movable side wall whose lower edge is mounted for pivoting about a horizontal axis and whose upper edge is secured to a cylindrical float which floats on the liquid contained in the said container, so that the said movable wall constitutes a flap which is foldable inwards of the said container and so that the upper generatix of the said float constitutes the skyline of a floating sill over which flows a sheet of liquid, into the said container and, by gravity, towards the tanks of the said boat.

2. The device according to claim 1, characterized in that the said boat is ballasted.

3. The device according to claim 1 or 2, characterized in that the said boat comprises water-tight air-tanks.

4. The device according to claim 1, characterized in that the said container is supported by two longitudinal floats perpendicular to the floating sill and the upper edges of the fixed side walls of the container are placed above the free surface of the liquid.

5. The device according to any one of claims 1 to 4, characterized in that the said flexible pipe comprises a valve placed on the said boat, said valve comprising a control rod permitting to control the opening and to remotely alter the height of the sheet of liquid flowing over the said sill.

6. The device according to any one of claims 1 to 4, characterized in that the settling tanks are provided with vent-holes equipped with a valve which permits to control the opening of the vent-hole and to remotely alter the height of the height of the sheet of liquid which flows over the said floating sill.

7. Process for the recovery of floating sheets by means of a device according to claim 2, characterized in that the said boat comprises several tanks some of which only are filled with a liquid ballast and in that first the separating apparatus is connected to the bottom of the empty settling tanks and, as the latter fill up, the liquid ballast is expelled and the separating apparatus is connected to the bottom of the tanks which have just been emptied of their liquid ballast contents.

## Patentansprüche

1. Vorrichtung zur Wiederverwertung von flottierenden Flüssigkeits-, insbesonders Kohlenwasserstoff-Deckschichten bestehend aus einem Boot mit mindestens einem Abklärbehälter, dessen Boden bei Nichtbelastung unter der Wasserlinie liegt, und mindestens einem Entrahmungsgerät, das eine Schwelle aufweist, über die eine Flüssigkeitsschicht fliesst und eine Öffnung, die an dem unteren Teil liegt und die mit dem Unterteil der genannten Abklärbehälter durch einen Schlauch verbunden ist, in dem die genannte Flüssigkeit durch Schwerkraft fliesst, dadurch gekennzeichnet, dass das gennante Entrahmungsgerät einen an seinem Oberteil geöffneten Behälter aufweist, der von Schwimmkörpern getragen wird und der unabhängig von dem genannten Boot schwimmt, wobei der genannte Behälter eine bewegliche Seitenwand aufweist, deren unterer Rand um eine horizontale Achse schwenkbar ist und deren oberer Rand an einem zylindrischen Schwimmkörper befestigt ist, der in der in dem genannten Behälter enthaltenen Flüssigkeit schwimmt, so dass die genannte bewegliche Wand eine nach innen in den genannten Behälter herunterklappbare Klappe darstellt und dass die obere Generatrix des genannten Schwimmkörpers die Spitzenlinie einer Schwimmschwelle darstellt, über die eine Flüssigkeitswelle in den genannten Behälter fliesst und durch Schwerkraft den Behältern des genannten Bootes zuströmt.

2. Vorrichtung nach Anspruch 1, dadurch gekennzeichnet, dass das genannte Boot mit Ballast beladen ist.

3. Vorrichtung nach einem der Ansprüche 1 und 2, dadurch gekennzeichnet, dass das genannte Boot wasserdichte Caissons enthält.

4. Vorrichtung nach Anspruch 1, dadurch gekennzeichnet, dass der genannte Behälter von zwei zu der genannten Schwimmschwelle senkrechten Längsschwimmkörpern getragen wird und die oberen Ränder der festen Seitenwände des genannten Behälters oberhalb der freien Oberfläche der Flüssigkeit angeordnet sind.

5. Vorrichtung nach einem der Ansprüche 1 bis 4, dadurch gekennzeichnet dass der genannte Schlauch ein auf dem genannten Boot angebrachtes Ventil enthält, welches einen Steuerstab aufweist, mit dem die Öffnung eingestellt und aus der Entfernung die Höhe der Flüssigkeitswelle verändert werden kann, die über die genannte Schwimmschwelle fliesst.

6. Vorrichtung nach einem der Ansprüche 1 bis 4, dadurch gekennzeichnet, dass die Abklärbehälter Luftabzüge aufweisen, die mit einem Ventil ausgerüstet sind, durch das die Öffnung des Luftabzuges eingestellt und aus der Entfernung die Höhe der Flüssigkeitswelle, die über die genannte Schwimmschwelle fliesst, verändert werden kann.

7. Verfahren zur Wiederverwertung von flottierenden Schichten mittels einer Vorrichtung nach Anspruch 2; dadurch gekennzeichnet, dass das genannte Boot mehrere Behälter aufweist, von denen nur einige mit einem flüssigen Ballast gefüllt sind und die man zunächst mit dem Entrahmungsgerät auf dem Boden der leeren Abklärbehälter verbindet und wenn diese aufgefüllt werden, wird der flüssige Ballast nach und nach ausgestossen und das Entrahmungsgerät mit dem Boden der Behälter verbunden, die gerade von ihrem flüssigen Ballast befreit wurden.

Fig. 1

Fig. 4

Fig. 2

Fig. 3